# EUROPÄISCHE PATENTSCHRIFT

(11) **EP 2 948 031 B1**
(45) Veröffentlichungstag und Bekanntmachung des Hinweises auf die Patenterteilung: **26.02.2020**
(21) Anmeldenummer: 14701411.2
(22) Anmeldetag: 27.01.2014
(51) Int. Cl.: A47J 31/36

(54) **BRÜHMODUL**
BREWING MODULE
MODULE D'ÉBOUILLANTAGE

(30) Priorität: 28.01.2013 EP 13405009
(43) Veröffentlichungstag der Anmeldung: 02.12.2015
(73) Patentinhaber: Tchibo GmbH, 22297 Hamburg (DE)
(72) Erfinder: BALKAU, Werner, CH-8762 Schwändi (CH)
(74) Vertreter: Frei Patent Attorneys
(86) Internationale Anmeldenummer: PCT/EP2014/051531
(87) Internationale Veröffentlichungsnummer: WO 2014/114792

(56) Entgegenhaltungen:
- EP-A1- 2 368 466
- EP-A1- 2 368 466
- EP-A1- 2 484 252
- EP-A1- 2 484 252
- EP-A1- 2 543 290

## Beschreibung

Die Erfindung betrifft Extraktionsgeräte zum Zubereiten von Getränken oder dergleichen aus einem in einer Kapsel enthaltenen Extraktionsgut oder einem löslichen Produkt, beispielsweise gemahlenem Kaffee. Sie betrifft insbesondere ein Brühmodul für ein Extraktionsgerät oder ein Gerät zum Herstellen von Getränken oder anderen Lösungen aus einem löslichen Produkt sowie ein Extraktionsgerät mit einem solchen Brühmodul.

Extraktionsgeräte zum Zubereiten von Getränken oder dergleichen aus einem in einer Portionsverpackung vorhandenen Extraktionsgut sind insbesondere als Kaffee- oder Espressomaschinen, aber auch als Teemaschinen (Teebrühgeräte) Zum relevanten Stand der Technik gehören beispielsweise die folgenden Dokumente: EP 2 484 252 A1, EP 2 368 466 A1, EP 2 543 290 A1. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet.

Dies alles geschieht in einem sogenannten Brühmodul (auch Brühgruppe genannt). Ein solches weist eine Brühkammer auf, in der die Kapsel aufgenommen wird. Besonders beliebt sind Brühmodule, bei welchen die Kapsel in das Brühmodul eingelegt und die Brühkammer bspw. mittels eines Bedienhebels oder durch einen automatischen Antrieb verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühkammerteile, die Brühflüssigkeit fliesst im Wesentlichen horizontal, und der Kapselbehälter ist unterhalb der Brühkammer ausgebildet.

Damit der Designer bei der Gestaltung einer Kaffeemaschine oder eines anderen Geräts zum Brühen von Brühgetränken möglichst viele Freiheitsgrade hat, ist es von Vorteil, wenn das Brühmodul relativ kompakt ausgeführt ist. Insbesondere die axiale Dimension - d.h. die Dimension in Richtung der Relativbewegung der Brühkammerteile - im geöffneten Zustand des Brühmoduls ist oft ein limitierender Faktor.

Ausserdem ist in mehrfacher Hinsicht von Vorteil, wenn das Brühmodul möglichst einfach aufgebaut und mit verhältnismässig wenigen zueinander beweglichen Teilen versehen ist - das ist sowohl im Hinblick auf die Herstellungskosten als auch für die Langzeitverlässlichkeit von Vorteil.

Der vorliegenden Erfindung stellt sich die Aufgabe, ein Brühmodul für ein Extraktionsgerät, beispielsweise eine Kaffeemaschine, oder ein Gerät zum Herstellen von Getränken oder anderen Lösungen aus einem löslichen Produkt (z.B. Kakaopulver, Instantkaffee, Milchpulver oder Instant-Suppe) zum portionenweisen Zubereiten eines Getränkes oder anderen Extraktions- oder löslichen Produkts aus einem in einer Kapsel verpackten Extraktionsgut, zur Verfügung zu stellen, welches eine einfache und kompakte Bauweise ermöglicht. Das Brühmodul sollte insbesondere für einen horizontalen Einbau geeignet sein.

Ein "Extraktionsgut" im Sinne dieser Erfindung sind dabei neben extrahierbaren Ausgangsprodukten, wie z.B. Kaffeepulver oder Tee, auch lösliche Ausgangsprodukte, wie z.B. Kakaopulver, Instantkaffeegranulat, Milchpulver oder Instant-Suppenpulver, mit denen sich Getränke, Nahrungsmittel oder andere Lösungen herstellen lassen. Dementsprechend sind unter "Extraktionsprodukten" auch Produkte zu verstehen, die durch Herstellung eines löslichen Ausgangsproduktes und einer Flüssigkeit hergestellt werden. Ein "Extraktionsgerät" im Sinne dieser Erfindung ist dementsprechend auch ein Gerät zu verstehen, in dem Produkte durch Auflösung eines löslichen Ausgangsproduktes in einer Flüssigkeit hergestellt werden.

Das Brühmodul weist ein Gehäuse, ein durch einen Mechanismus relativ zum Gehäuse bewegbares erstes Brühmodulteil und ein zweites Brühmodulteil auf, wobei das erste und das zweite Brühmodulteil eine Ausleitvorrichtung zum Ausleiten eines Extraktionsprodukts aus einer Portionspackung und einen Injektor zum Einleiten einer Extraktionsflüssigkeit in die Portionspackung bilden. Bei dem Gehäuse kann es sich auch um das Gehäuse eines Gerätes, z.B. einer Kaffeemaschine, handeln, in die das Brühmodul eingebaut ist. In einer geschlossenen Stellung (d.h. das erste und zweite Brühmodulteil liegen unmittelbar aneinander und bilden eine Aufnahme für eine Portionspackung) wird eine Brühkammer gebildet, welche die Portionspackung beim Brühvorgang mindestens teilweise umgibt.

Das zweite Brühmodulteil kann relativ zum Gehäuse in einer zur Bewegungsrichtung des ersten Brühmodulteils entgegengesetzten Richtung bewegbar sein.

Das bedeutet, dass beim Verschliessen und Öffnen des Brühmoduls im Unterschied zum Stand der Technik nicht nur ein Brühmodulteil relativ zum Gehäuse bewegt wird, während das andere still steht. Vielmehr bewegen sich die Brühmodulteile aufeinander zu bzw. voneinander weg.

Dabei kann die Bewegung des ersten und zweiten Brühmodulteils entlang einer (gemeinsamen) Achse, d.h. linear erfolgen. Die Brühmodulteile bewegen sich dann unmittelbar aufeinander zu bzw. unmittelbar voneinander weg; die Bewegungsvektoren sind insbesondere antiparallel. Eine solche lineare Bewegung erfolgt ohne Schwenkung und behält bspw. die Orientierung der Brühmodulteile im Raum bei.

Bevorzugt sind die Bewegungen der Brühmodulteile unmittelbar aneinander gekoppelt. Der Mechanismus, welcher das erste Brühmodulteil bewegt, bewegt gleichzeitig auch das zweite Brühmodulteil - einfach in entgegengesetzter Richtung. Eine individuelle Bewegung nur eines Brühmodulteils ist dann bei bestimmungemässer Verwendung gar nicht möglich.

Insbesondere kann eine solche Kopplung so eingerichtet sein, dass ein solcher Mechanismus beide Brühmodulteile direkt - und nicht bspw. indirekt über das andere Brühmodulteil - antreibt.

Eine Portionspackung kann im Kontext dieser Anmeldung einerseits eine Kapsel sein, in welcher das Extraktionsgut verpackt ist, und welche für den Extraktionsprozess angestochen oder sonstwie geöffnet werden kann. Andererseits kann - sofern nichts anderes vermerkt ist - die Portionspackung auch eine "Portionspackung aus einem Flüssigkeitsdurchlässigen Material sein, bspw. in der Art von Portionspackungen, die relativ flach ausgestaltet und als Pod" oder "Pad" bekannt sind.

Das Brühmodul, insbesondere dessen Gehäuse, ist zum festen Einbau in die Kaffeemaschine vorgesehen. Bei einer mit dem Brühmodul versehenen Kaffeemaschine erfolgt daher die Bewegung der beiden Brühmodulteile relativ zum äusseren Gehäuse der Kaffeemaschine und letztlich relativ zur Unterlage, auf welcher die Kaffeemaschine abgestellt ist.

Auch wenn die Länge beim Verschliessen des Brühmoduls von den beiden Brühmodulteilen relativ zueinander zurückzulegende Strecke durch diese Massnahme allein noch nicht reduziert wird (die Strecke wird auf die Bewegungen der beiden Brühmodulteile relativ zum Gehäuse verteilt), erhöht sie doch die Designfreiheitsgrade und kann nur schon daher zu einer kompakteren Bauweise führen.

Gemäss der Erfindung zeichnet sich das Brühmodul für ein Extraktionsgerät zum portionenweisen Zubereiten eines Getränkes oder anderen Extraktionsprodukts aus einem in einer Portionspackung verpackten Extraktionsgut dadurch aus, dass der Mechanismus eine drehbar am Gehäuse gelagerte Kurvenscheibe mit einer spiralförmig verlaufenden Führungsfläche aufweist, wobei das erste Brühmodulteil bei einer Drehung der Kurvenscheibe durch die Führungsfläche entlang einer gehäusefesten Verschiebungsstrecke verschiebbar ist.

Zu diesem Zweck weist das erste Brühmodulteil beispielsweise ein Führungselement, insbesondere einen Führungszapfen, auf, welches lateral nach aussen ragt und mit der Führungsfläche im Eingriff steht.

Die Führungsfläche kann insbesondere durch eine spiralförmig verlaufende Führungsnut ausgebildet sein.

Die Führungsnut und das Führungselement können in einem solchen Fall so aufeinander abgestimmt sein, dass im geschlossenen Zustand des Brühmoduls eine selbstschliessende Wirkung bei einem internen Druckaufbau vorhanden ist. Im geschlossenen Zustand (aufgrund eines Anschlags in der Führungsnut und/oder aufgrund eines Anstehens der Brühmodulteile aneinander und/oder an einem Anschlag am Gehäuse können in diesem Zustand die Brühmodulteile nicht weiter aufeinander zubewegt werden) muss dann einem Auseinanderdrücken der Brühmodulteile - ein solches gibt es während des Brühprozesses aufgrund des Brühkammerinnendrucks - kein aktives Entgegenwirken - bspw. durch den Bedienhebel oder den Antrieb - erfolgen. Vielmehr wird das Führungselement in der Führungsnut verstemmt.

Dies kann insbesondere bedeuten, dass im geschlossenen Zustand dort, wo das Führungselement an der Führungsfläche ansteht (das kann bspw. eine parallel zur Drehachse der Kurvenscheibe verlaufende Berührungslinie sein), die zur Führungsfläche tangentiale Ebene nicht senkrecht zur axialen Richtung (Verschieberichtung der Brühmodulteile) verläuft. Diese tangentiale Ebene ist vielmehr so zur Senkrechten verkippt, dass eine in der axialen Richtung durch das Führungselement ausgeübte Kraft eine Komponente in diejenige Richtung hat, die zu einem Drehmoment auf die Kurvenscheibe in Verschliess-Drehrichtung führt.

Zu diesem Zweck kann das Führungselement oberhalb bzw. unterhalb der zur axialen Richtung parallelen Ebene geführt sein, in welcher die Drehachse der Kurvenscheibe verläuft. Konkret kann bei einer Drehung im Uhrzeigersinn der Kurvenscheibe zum Verschliessen des Brühmoduls der Führungszapfen des links liegenden Brühmodulteils oberhalb dieser Ebene liegen bzw. der Führungszapfen des rechts liegenden Brühmodulteils unterhalb dieser Ebene - und umgekehrt.

Die selbstschliessende Wirkung hat den zusätzlichen Vorteil, dass die Dichtwirkung beim Brühprozess unterstützt wird.

Zusätzlich zum Führungselement kann ein Mittel vorhanden sein, welches nur einen - axialen - Bewegungsfreiheitsgrad des Brühmodulteils zulässt. So kann bspw. das Gehäuse - oder ein mit dem Gehäuse verbundenes separates Objekt - eine Führungsbahn aufweisen, welche die Verschiebungsstrecke definiert. Die Führungsbahn kann insbesondere durch eine Gehäuse-Führungsnut gebildet sein, welche in axialer Richtung (bei einem horizontalen Brühmodul im Wesentlichen horizontal) verläuft und in welche die Führungselemente ebenfalls eingreifen. In diesem Fall wird entweder die Gehäuse-Führungsnut oder die Führungsnut der Kurvenscheibe (oder beide) als Langloch, d.h. durchgehend ausgestaltet sein, wodurch bspw. das Führungselement (insbesondere Führungszapfen) durch die Gehäuse-Führungsnut in die Kurvenscheiben-Führungsnut eingreift - oder umgekehrt.

Alternativ zu einer solchen Gehäuse-Führungsnut, in welche das Führungselement eingreift, kann die axiale Verschiebungsrichtung auch durch andere Mittel definiert sein, bspw. durch eine Gleitschiene, die nur einen Bewegungsfreiheitsgrad zulässt.

Alternativ zu einer Führungsnut kann die Kurvenscheibe auch eine tangentiale oder sonstwie einseitige innere und/oder äussere Führungsfläche aufweisen, beispielsweise in Kombination einer Rückstellung des bewegten Brühmodulteils bzw. der Brühmodulteile über eine Federkraft.

Ausserdem kann die Kurvenscheibe je eine Führungsfläche, insbesondere Führungsnut, für das erste und für das zweite Brühmodulteil aufweisen.

Diese Kombination ist besonders vorteilhaft. So kann erstens ein für das eine Brühmodulteil zur Verfügung gestellter Bewegungsmechanismus - realisiert durch die Kurvenscheibe - ohne die Notwendigkeit weiterer Teile auch für das zweite Brühmodulteil verwendet werden. Ausserdem ist diese Kombination im Hinblick auf eine kompakte Bauweise von Vorteil: eine einzige, vergleichsweise klein dimensionierte Kurvenscheibe bzw. ein einziges Paar von zwei kontralateral angeordneten Kurvenscheiben (mit spiegelbildlichen Führungsflächen) reicht aus. Die bei einer Kurvenscheibe mit Spiralbahn maximal mögliche Wegstrecke entspricht dem Radius der Kurvenscheibe. Dadurch, dass beide Brühmodulteile mit derselben Kurvenscheibe bewegt werden, kann die Relativbewegung um die doppelte Wegstrecke erfolgen, d.h. die Brühmodulteile können relativ zueinander um eine fast dem Kurvenscheibendurchmesser entsprechende Wegstrecke bewegt werden.

Ausserdem kann die Steigung der Spiralbahn der Kurvenscheibe in der Praxis nicht beliebig gross gewählt werden, weil sonst die Kraft auf die Kurvenscheibe und insbesondere die Gehäuse-Führungsnut zu gross würde. Durch die vorteilhafte Kombination kann trotz dieser Beschränkung ein verhältnismässig kleiner Drehwinkel ausreichen. Das wiederum trägt dazu bei, dass auch auf Seiten des Antriebs (bspw. Bedienhebel oder elektrischer Antrieb) kompakte Lösungen möglich sind.

Die vorstehend beschriebene Ausgestaltung der Führungsnut und Anordnung des Führungselements kann bei einer solchen Kombination für beide Seiten, d.h. die Führungselemente beider Brühmodulteile und ihre entsprechenden Führungsnuten, gelten.

Besonders vorteilhaft - und der Kompaktheit des Brühmoduls nicht wesentlich abträglich - ist, wenn an beiden lateralen Seiten je eine Kurvenscheibe vorhanden ist, wobei die Kurvenscheiben bspw. zueinander spiegelbildlich sind. Dabei sind bevorzugt beide Kurvenscheiben an den Antriebsmechanismus gekoppelt.

Die Spiralbahn muss keine logarithmische, archimedische oder sonstwie mathematisch reguläre Spirale sein (auch wenn ein solcher Verlauf natürlich möglich ist). Vielmehr reicht bspw. aus, wenn die Bahn in Funktion des Polarwinkels mindestens bereichsweise einen stetig wachsenden bzw. stetig schrumpfenden (je nach Drehrichtung) Abstand von der Drehachse der Kurvenscheibe hat.

In Ausführungsformen ist m ersten Brühmodulteil mindestens eine erste Anstechspitze zum Anstechen der Kapsel vorhanden, wodurch eine Brühflüssigkeit in die Kapsel eingeleitet bzw. das Extraktionsprodukt aus der Kapsel ausgeleitet werden kann.

In diesen Ausführungsformen zeichnet sich das Brühmodul dadurch aus, dass das erste Brühmodulteil ein Brühmodulteil-Gehäuse aufweist, und dass die erste Anstechspitze durch Verschliessen der Brühkammer relativ zum Brühmodulteil-Gehäuse zu einem Inneren der Brühkammer hin verschiebbar ist.

Mit anderen Worten ist die Anstechspitze im geöffneten Zustand der Brühkammer zurückgezogen und wird durch Verschliessen der Brühkammer ausgefahren.

Durch diese Massnahme kann bewirkt werden, dass die Brühmodulteile im geöffneten Zustand des Brühmoduls im Vergleich zum Stand der Technik näher beieinander sein können: eine radiale Anlagefläche, die während des Brühprozesses an der Kapsel anliegt, und die durch das Brühmodulteil-Gehäuse gebildet wird oder mit dieser ohne Möglichkeit einer Relativbewegung verbunden ist, muss im geöffneten Zustand nur mindestens um die axiale Ausdehnung der Kapsel von der Anstechspitze des anderen Brühmodulteils oder (falls dieses ebenfalls eine ausfahrbare Anstechspitze aufweist) von der Anlagefläche des anderen Brühmodulteils entfernt sein - und nicht wie im Stand der Technik um die axiale Ausdehnung der Kapsel plus der Anstechspitzen.

Diese Massnahme trägt also in zur Kompaktheit der Anordnung bei.

Die erste Anstechspitze kann bspw. an einem Injektor- (oder Extraktions-)Kolben ausgebildet sein, welcher beim Verschliessen bzw. Öffnen durch einen geeigneten Vor- und Rücktriebsmechanismus angetrieben wird.

Ein solcher Vor- und Rücktriebsmechanismus kann einen Kolbenhebel beinhalten, welcher schwenkbar gelagert ist und mit dessen Arm der Kolben so gekoppelt ist, dass er bei einer Schwenkbewegung des Kolbens einem Vor- bzw. Rücktrieb unterworfen ist.

Der Antrieb eines solchen Hebels kann bspw. durch Anschlag an einer Anschlagfläche des Gehäuses bei Bewegungen des ersten Brühmodulteils erfolgen.

Auch andere Antriebsmechanismen - bspw. eine unmittelbare Kopplung des Kolbens bzw. eines Kolbenhebels an den Mechanismus, welcher das Brühmodul schliesst - sind denkbar.

Das Brühmodul kann als horizontales Brühmodul - gemäss der vorstehenden Definition - ausgeführt sein.

Das Brühmodul kann, wenn es als horizontales Brühmodul ausgestaltet ist, ein Paar von Kapselführungselementen aufweisen, welche die Kapsel nach dem Einwerfen halten und welche bspw. auch beim wieder auswerfen der Kapsel mitwirken.

Die Kapselführungselemente können bspw. je eine erste Kapselführungsnut zum Aufnehmen eines Kapselkragens aufweisen, welche nach unten durch einen Haltemittel abgeschlossen ist und in welche die Kapsel eingeworfen wird.

Zusätzlich können die Kapselführungselemente je eine zweite Kapselführungsnut aufweisen, die nach unten offen ist, wobei durch das Öffnen der Brühkammer der Kapselkragen in die zweite Kapselführungsnut gelangt. Zu diesem Zweck können die Kapselführungselemente bspw. eine Mitnahmepartie aufweisen, welche den Kapselkragen beim Öffnen der Brühkammer in die zweite Kapselführungsnut schieben.

Ebenfalls Gegenstand der Erfindung ist ein Extraktionsgerät, insbesondere eine Kaffeemaschine, mit einem der genannten Brühmodule.

Ein solches Extraktionsgerät weist nebst einem Brühmodul gemäss der Erfindung auch einen Behälter oder Anschluss für die Brühflüssigkeit, eine Pumpe sowie eine Heizung für die Brühflüssigkeit und gegebenenfalls Mittel zum Regeln der Heizung und/oder der Pumpe auf. Ebenfalls können - wie an sich bekannt - eine Abstellfläche für eine Getränketasse, ein Bedienpanel und/oder andere Elemente vorhanden sein, wie sie an sich von Kaffee- oder Teemaschinen bekannt sind.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen zeigen teilweise einander entsprechende Elemente von Figur zu Figur unterschiedlichen Grössen. Es zeigen:
- Figur 1 eine Ansicht einer ersten Ausführungsform eines Brühmoduls;
- Figur 2 eine Ansicht des Brühmoduls aus Fig. 1 mit Kapsel während des Kapseleinwurfs;
- Figur 3 eine Explosionsdarstellung des Brühmoduls gemäss Fig. 1-2;
- Figuren 4 - 9 je eine Ansicht von Elementen des Brühmoduls von Fig. 1-3, teilweise angeschnitten dargestellt;
- Figur 10 eine zweite Ausführungsform eines Brühmoduls mit Kapsel;
- Figur 11 Elemente des Brühmoduls von Fig. 10;
- Figuren 12-16 das Brühmodul der Figuren 10 und 11 in verschiedenen Schliesszuständen, entlang einer vertikalen (Fig. 12, 15 und 16) bzw. horizontalen (Fig. 13 und 14) Ebene geschnitten;
- Figur 17 eine dritte Ausführungsform eines erfindungsgemässen Brühmoduls; und
- Figur 18 eine Illustration der selbstschliessenden Wirkung anhand einer Seitenansicht des entlang einer vertikalen Ebene geschnitten dargestellten Brühmoduls in seiner zweiten Ausführungsform

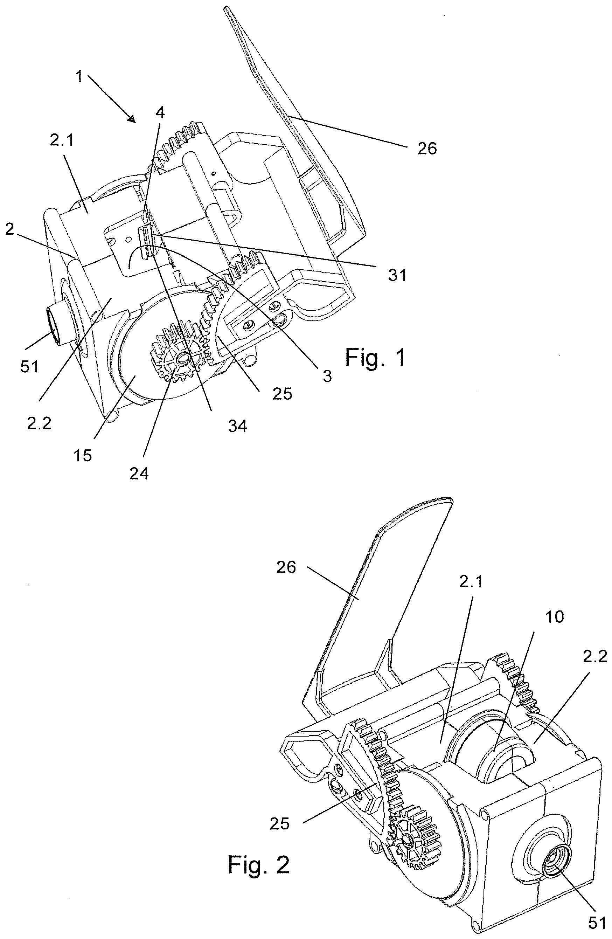

Das Brühmodul 1 gemäss **Figuren 1-9** weist ein Gehäuse 2 auf, welches hier aus zwei Gehäusehälften 2.1, 2.2 zusammengesetzt ist. Oberseitig bildet das Gehäuse eine Einwurföffnung 3, welches in Form und Dimensionierung auf die entsprechende Form und Dimensionierung einer mit Kaffee oder einem anderen Extraktionsgut gefüllten Portionenkapsel abgestimmt ist. Die Einwurföffnung 3 weist unter anderem Einwurf-Führungsnuten 4 zum Führen eines entsprechenden Kragens der Kapsel auf. Fig. 2 zeigt die Kapsel 10 beim Einwurf durch die Einwurföffnung.

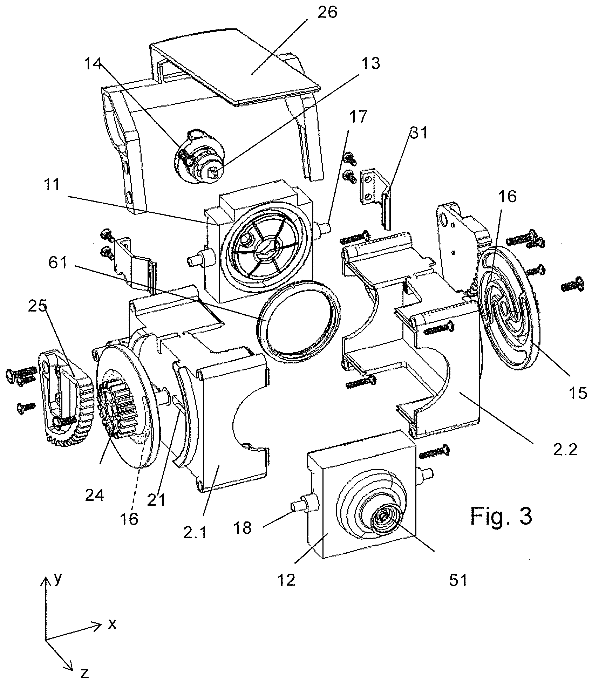

Durch das oder in dem Gehäuse sind - in axialer Richtung verschiebbar - ein erstes Brühmodulteil und ein zweites Brühmodulteil aufgenommen. Das erste Brühmodulteil bildet einen Injektor zum Anstechen der Kapsel und zum Einleiten von Brühwasser unter Druck. Das zweite Brühmodulteil bildet eine Ausleitvorrichtung ebenfalls zum Anstechen der Kapsel und zum Ausleiten des Brühgetränks. In Figur 3 sieht man das Injektorgehäuse 11, den Injektorkolben 14 mit der ersten Anstechspitze 13 und die Dichtung 61 des Injektors sowie das Extraktionsgehäuse 12 der Ausleitvorrichtung. In der Ausführungsform gemäss Figuren 1-9 ist der Injektorkolben im Betriebszustand fest mit dem Injektorgehäuse 11 verbunden.

In Figur 3 ist auch ein kartesisches Koordinatensystem eingezeichnet. In diesem Text werden generell Richtungen entlang der Achse (z-Achse), entlang welcher die Brühmodulteile bewegt werden, als "axiale" Richtungen bezeichnet. Die x-Achse definiert seitliche oder "laterale" Richtungen, und die y-Achse "vertikale" Richtungen. Diese Definitionen sind nicht so auszulegen, dass sie eine bestimmte Orientierung des Brühmoduls beim Einbau zwingend vorgeben, auch wenn es für viele Ausführungsformen von Vorteil ist, wenn die "vertikale" Richtung einer lotrechten oder annähernd lotrechten (bspw. um maximal 15° zum Lot geneigt) Richtung entspricht.

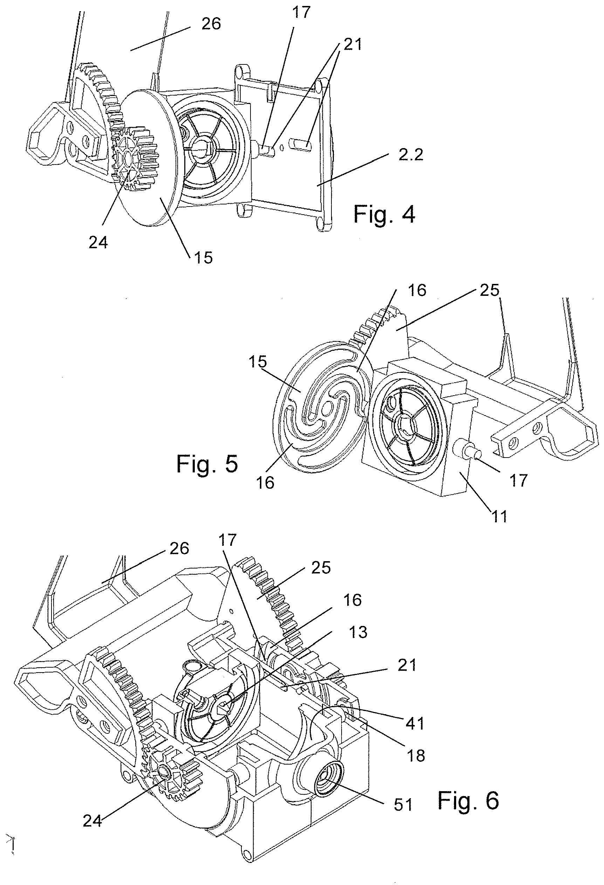

In Bezug auf laterale Richtungen aussen am Gehäuse ist beidseitig je eine Kurvenscheibe 15 drehbar gelagert. Die Kurvenscheiben weisen je zwei Führungsnuten 16 auf. Sowohl das Injektorgehäuse 11 als auch das Extraktionsgehäuse 12 weisen je zwei aussenseitige Führungszapfen 17, 18 auf, welche durch jeweils eine Gehäuse-Führungsnut 21 in die Führungsnuten 16 der Kurvenscheibe eingreifen. Dadurch werden bei einer Drehung der Kurvenscheiben 15 die Brühmodulteile axial durch die Gehäuse-Führungsnuten 21 geführt, bewegt. Dieser Mechanismus ist anhand Figuren 4-6 besonders gut ersichtlich.

Die Kurvenscheiben 16 weisen aussenseitig je ein Antriebs-Zahnrad 24 auf. Dieses kann einstückig mit der Kurvenscheibe ausgebildet oder drehfest mit dieser verbunden sein.

Ebenfalls mit Zähnen versehene, in die Antriebszahnräder 24 eingreifende Antriebselemente 25 sind mit einem Verschlusshebel 26 verbunden.

Nach dem Einwerfen der Kapsel im geöffneten Zustand des Brühmoduls (Fig. 2) wird der Verschlusshebel durch eine Kippbewegung (in Fig. 2 nach vorne) betätigt. Dadurch werden durch den vorstehend beschriebenen Mechanismus durch die Kurvenscheiben 15 die Brühmodulteile aufeinander zubewegt, bis das Brühmodul verschlossen ist. Beim Verschliessen des Brühmoduls werden eine erste Anstechspitze 13 des Injektors und eine zweite Anstechspitze 19 der Ausleitvorrichtung so in die Kapsel hineingedrückt, dass sie von der Anstechspitze 13 perforiert und von der Anstechspitze 19 entweder leicht angestochen oder ebenfalls perforiert wird.

Daran anschliessend kann der Brühprozess stattfinden, bei welchem heisses Wasser unter Druck vom Injektor durch die erste Anstechspitze 13 in die Kapsel eingeleitet wird. Das Brühgetränk wird auf Seiten der Ausleitvorrichtung durch die zweite Anstechspitze 19 aus der Kapsel abgeführt (Brühgetränk-Auslass 51) und kann von dort in ein am dafür vorgesehenen Ort abgestelltes Trinkgefäss gelangen. Wenn die zweite Anstechspitze 19 die Kapsel beim Verschließen des Brühmoduls nicht oder nicht vollständig perforiert hat, erfolgt die Öffnung des Auslasses der Kapsel dadurch, dass sich die Auslassseite der Kapsel unter dem Überdruck der eingeleiteten Brühflüssigkeit auswölbt und sich gegen die zweite Anstechspitze 19 bewegt, wodurch die zweite Anstechspitze die Auslassseite der Kapsel perforiert.

Anschliessend an den Brühprozess wird das Brühmodul geöffnet, und die Kapsel kann nach unten in einen Kapselsammelbehälter fallen.

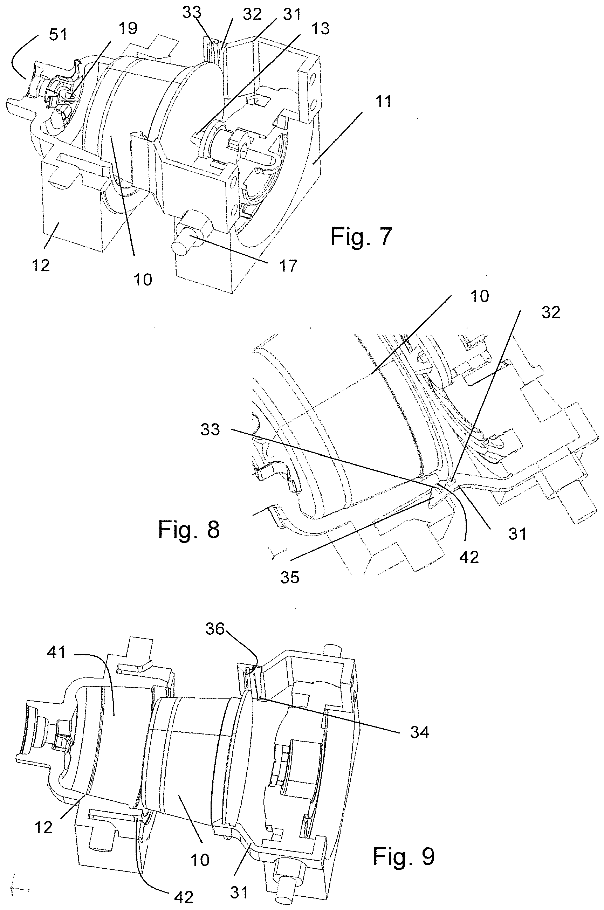

Zum Führen der Kapsel beim Verschliessen des Brühmoduls und zum Auswerfen der verbrauchten Kapsel beim Öffnen des Brühmoduls weist der Injektor beidseitig je ein Kapsel-Führungselement 31 auf. Die Funktion dieser Kapsel-Führungselemente wird insbesondere in Figuren 7-9 genauer dargestellt. Die Kapsel-Führungselemente 31 weisen je eine erste, injektionsseitige Kapselführungsnut 32 und eine zweite, extraktionsseitige Kapselführungsnut 33 auf. Die erste Kapselführungsnut 32 ist gegen unten (d.h. in Richtung des Kapselauswurfs aus dem Brühmodul) mit einem Haltesteg 34 abgeschlossen, während die zweite Kapselführungsnut 33 gegen unten offen ist. Die erste Führungsnut 32 ist hier ausserdem sich nach unten leicht verengend ausgebildet. Zur Auslassseite der Kapsel hin weisen die Kapsel-Führungselemente 31 ausserdem je eine nach innen weisende Rampe 35 auf.

Beim Einwerfen der Kapsel wird diese so geführt, dass der Kragen in die erste Kapselführungsnut 32 gelangt und auf dem Haltesteg 34 aufliegt. In diesem Zustand wird die Kapsel durch die Kapsel-Führungselemente 31 gehalten, wobei sie hinterseitig leicht nach unten (d.h. zur Auslassseite hin) hängen kann. Beim Verschliessen des Brühmoduls werden die Brühmodulteile wie bereits vorstehend beschrieben aufeinander zubewegt, wodurch die Hinterseite (die Auslassseite) der Kapsel in die Kapselaufnahme 41 der Ausleitvorrichtung gelangt (Fig. 7). Gegen Ende der Verschliessbewegung gelangt die Rampe 35 in Kontakt mit einer äusseren Führungsfläche 42 der Ausleitvorrichtung (Fig. 8), wodurch das Kapsel-Führungselement entgegen einer elastischen Kraft nach aussen abgelenkt wird. Im geschlossenen Zustand des Brühmoduls sind die Kapsel-Führungselemente 31 nicht mehr in Kontakt mit der Kapsel, die dann ganz in einer durch die Brühmodulteile gebildeten Brühkammer liegt.

Wird nach dem Brühvorgang die Brühkammer erneut geöffnet, können die Kapsel-Führungselemente wieder nach innen federn. Dadurch kann eine Mitnahmepartie 36 (Fig. 9) am Kragen der Kapsel 10 angreifen, so dass dieser in die zweite Führungsnut 33 gelangt und die Kapsel mit den Führungselementen mitbewegt wird. Sobald die Kapsel nicht mehr in der Kapselaufnahme 41 gehalten wird, kann sie nach unten aus dem Brühmodul heraus fallen, da die zweite Führungsnut 33 gegen unten offen ist.

Es ist nicht notwendig, dass die Kapsel-Führungselemente 31 eine Rampe aufweisen. Vielmehr besteht auch die Möglichkeit, dass stattdessen die Partie der Ausleitvorrichtung, auf welche die Kapsel-Führungselemente beim Verschliessen stossen, eine entsprechende Rampe aufweist. Für die hier beschriebene Funktion müssen lediglich die Formen der Teile so aufeinander abgestimmt sein, dass die Kapsel-Führungselemente beim Verschliessen auseinander bewegt werden. Dies kann bspw. wie hier beschrieben durch Auseinanderdrücken entgegen einer Federkraft geschehen.

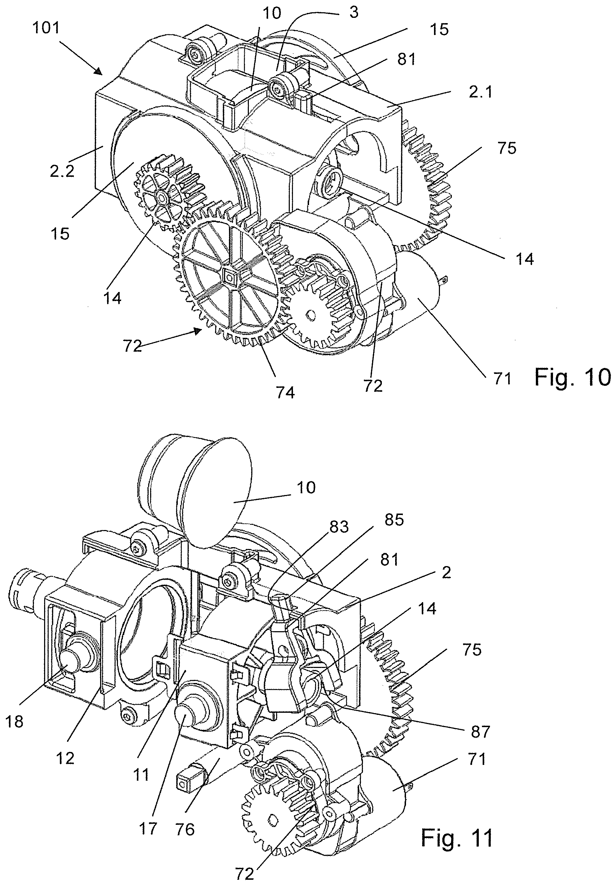

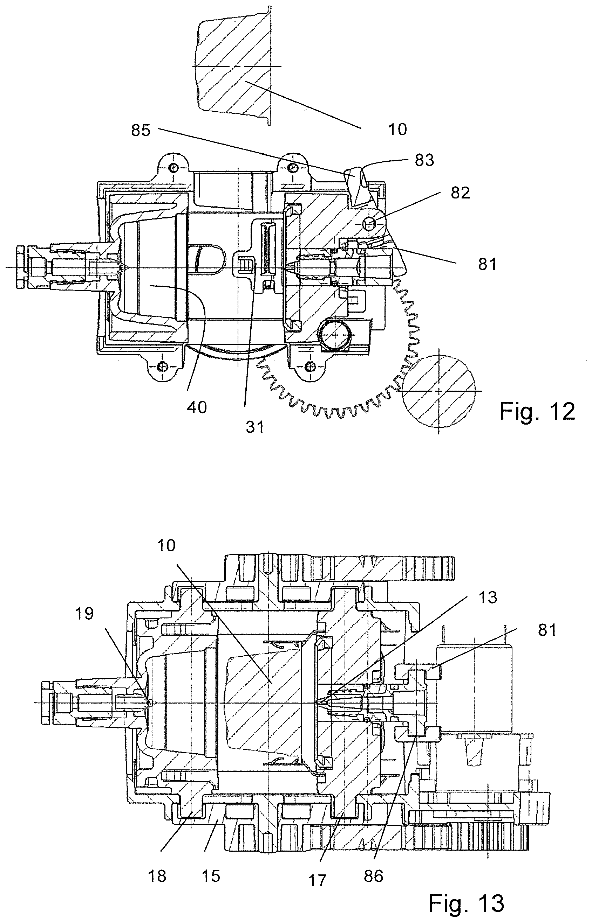

Die Ausführungsform des Brühmoduls 101 gemäss **Figuren 10-16** unterscheidet sich insbesondere in zweierlei Hinsicht vom Brühmodul 1 gemäss Figuren 1-9.

Erstens ist der Antrieb zum Öffnen und Verschliessen des Brühmoduls ein elektrischer, d.h. es existiert ein automatischer Verschliessmechanismus. Zu diesem Zweck weist das Brühmodul 101 einen Elektromotor 71 auf, welcher die Kurvenscheiben 15 (hier mit dem Antriebszahnrad 24) über ein Getriebe 72 antreibt. Damit auch in dieser Ausführungsform beide Kurvenscheiben 15 angetrieben werden, ist eines der Zahnräder 75 des Getriebes über eine Welle 76 (Fig. 11) mit einem entsprechenden kontralateralen Zahnrad 75 drehfest verbunden. Die Übertragung der Drehbewegung der Kurvenscheiben auf die Verschiebung der Brühmodulteile erfolgt wie im vorstehenden Ausführungsbeispiel beschrieben.

Zweitens ist das Brühmodul 101 mit einer ausfahrbaren ersten Anstechspitze 13 versehen. Zu diesem Zweck ist der Injektorkolben relativ zum Injektorgehäuse 11 axial verschiebbar gelagert. Ein Kolbenhebel 81 ist am Injektor durch einen Lagerstift 82 um eine durch letzteren definierte Schwenkachse schwenkbar gelagert. Eine Betätigungspartie 85 des Kolbenhebels 81, welche in Bezug auf den Injektorkolben 14 auf der anderen Seite der Schwenkachse angeordnet ist, stösst im geöffneten Zustand des Brühmoduls (Fig. 11, 12, 13) an einer ersten Anschlagfläche des Gehäuses 2 an.

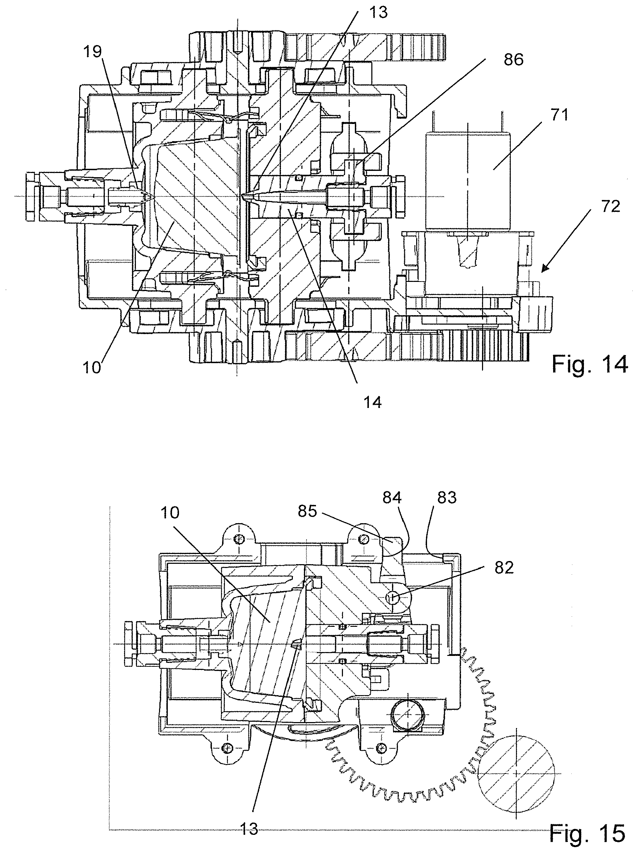

Beim Verschliessen des Brühmoduls nach dem Kapseleinwurf (Fig. 14) werden Injektor und Ausleitvorrichtung aufeinander zubewegt, wodurch auch der Kolbenhebel 81 vom ersten Anschlag weg bewegt wird. Gegen Ende der Schliessbewegung stösst die Betätigungspartie 85 auf der anderen Seite gegen einen zweiten Anschlag 84 an, wodurch der Kolbenhebel beim weiteren Schliessen einer Schwenkbewegung 82 unterworfen wird. Durch Kolbenzapfen 86, die in einer Kolbenhebelnut 87 geführt sind, wird bei einer solchen Schwenkbewegung der Injektorkolben 14 mitgenommen und ins Innere der Brühkammer geschoben, wodurch die Kapsel durch die erste Anstechspitze 13 perforiert wird (Fig. 15).

Der Vertikalanteil der Kolbenhebel-Schwenkbewegung wird dabei durch die Kolbenhebelnut 87 aufgenommen.

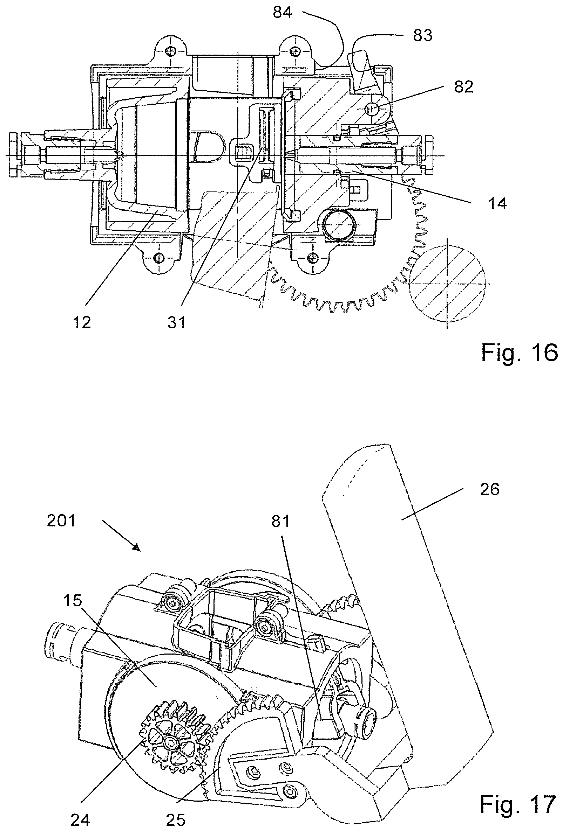

Beim erneuten Öffnen des Brühmoduls (Fig. 16) sorgt das Anstehen des Kolbenzapfens 86 am ersten Anschlag 83 dafür, dass der Injektorkolben 14 wieder vollständig zurückgezogen wird, wodurch die Kapsel 10 nach unten in den Kapselbehälter fallen kann.

Abweichend von der Ausführungsform der Figuren 10-16 wäre es auch möglich, ein Brühmodul mit elektrischem Antrieb aber ohne den ausfahrbaren Injektorkolben auszugestalten.

Andererseits besteht auch die Möglichkeit, ein Brühmodul mit manuellem Schliessantrieb mit einem ausfahrbaren Injektorkolben auszugestalten. Ein entsprechendes Ausführungsbeispiel eines Brühmoduls 201 ist in **Figur 17** illustriert. Bei diesem Beispiel ist der Antrieb mit Verschlusshebel 26 wie anhand Figuren 1-9 beschrieben ausgeführt, während der Kolbenhebel 81 und seine Funktion wie anhand von Figuren 10-16 beschrieben ausgestaltet ist.

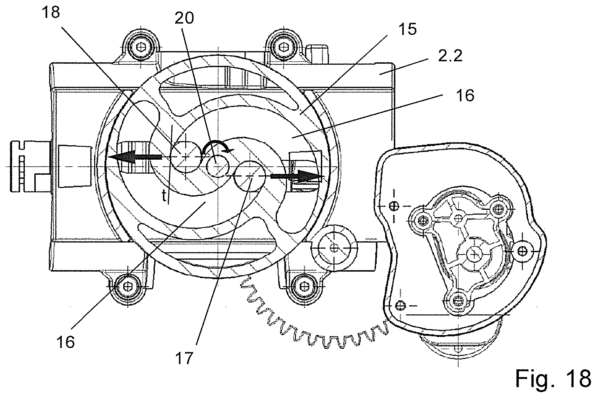

Anhand von **Figur 18** - diese zeigt die zweite Ausführungsform des Brühmoduls; die beschriebene Wirkung betrifft jedoch alle drei Ausführungsformen - wird die selbstschliessende Wirkung der Anordnung dargestellt. Figur 18 zeigt das Brühmodul im geschlossenen Zustand. Während des Brühprozesses herrscht im Innern der Brühkammer ein erhöhter Innendruck, durch welchen Injektor und Ausleitvorrichtung auseinander gedrückt werden. Die Führungszapfen 17, 18 werden dadurch in Richtung der horizontalen Pfeile in Fig. 18 gedrückt.

Durch die Anordnung der Führungszapfen 17, 18 unterhalb bzw. oberhalb der durch die Welle 20 definierten Drehachse der Kurvenscheibe 16 und die Ausgestaltung der Führungsnuten 16 wird jedoch die Einleitung einer solchen Kraft ein Verstemmen in der entsprechenden Führungsnut 16 bewirken.

In Fig. 18 ist die Tangente t zur Berührungsfläche zwischen Führungszapfen 18 und Führungsfläche am Ort der Krafteinwirkung (auf der Ebene der Zapfenachse) gezeichnet. Diese ist zur Vertikalen geneigt, was verstemmend wirkt: die Kurvenscheibe 16 erfährt durch die tangentiale Komponente der von den Führungszapfen ausgeübten Kraft ein Drehmoment in der durch den Drehpfeil angezeigten Richtung.

Aufgrund dieses Verstemmens wird einerseits die Dichtwirkung in der Brühkammer während des Brühprozesses begünstigt. Andererseits muss die Zuhaltekraft während des Brühprozesses dadurch nicht vom Hebel bzw. dem Motor gewährleistet werden.

Die Anordnung der Führungszapfen relativ zueinander und relativ zur Drehachse der Kurvenscheibe sieht man bspw. auch in Fig. 4 sehr deutlich.

Die beschriebenen Brühmodule können in mehrfacher Hinsicht geändert werden. So kann bspw. ein ausfahrbarer Kolben mit Anstechspitze(n) auf Seiten der Ausleitvorrichtung vorhanden sein, zusätzlich zum ausfahrbaren Injektorkolben oder als Alternative dazu.

Ausserdem können injektionsseitig und/oder extraktionsseitig jeweils mehrere Anstechspitzen vorhanden sein.

Die Rollen des ersten und zweiten Brühmodulteils können im Vergleich zu den hier beschriebenen Anordnungen auch vertauscht sein. D.h. es kann sein, dass das Brühmodulteil, welches die Kapselaufnahme aufweist, als Injektor ausgebildet ist, wobei dann das andere Brühmodulteil die Ausleitvorrichtung bildet. Auch für andere Funktionen ist ein Vertauschen möglich; bspw. kann der Bedienhebel extraktionsseitig angeordnet sein.

Kurvenscheibe 16 erfährt durch die tangentiale Komponente der von den Führungszapfen ausgeübten Kraft ein Drehmoment in der durch den Drehpfeil angezeigten Richtung.

Aufgrund dieses Verstemmens wird einerseits die Dichtwirkung in der Brühkammer während des Brühprozesses begünstigt. Andererseits muss die Zuhaltekraft während des Brühprozesses dadurch nicht vom Hebel bzw. dem Motor gewährleistet werden.

Die Anordnung der Führungszapfen relativ zueinander und relativ zur Drehachse der Kurvenscheibe sieht man bspw. auch in Fig. 4 sehr deutlich.

Die beschriebenen Brühmodule können in mehrfacher Hinsicht geändert werden. Beispielsweise können wie eingangs beschrieben der erste und der zweite Aspekt unabhängig voneinander realisiert werden, jeweils auch gemäss dem dritten Aspekt ausgestaltet oder nicht. Auch andere Merkmale der Konstruktion können Bedürfnissen entsprechend angepasst werden.

So kann bspw. ein ausfahrbarer Kolben mit Anstechspitze(n) auf Seiten der Ausleitvorrichtung vorhanden sein, zusätzlich zum ausfahrbaren Injektorkolben oder als Alternative dazu.

Ausserdem können injektionsseitig und/oder extraktionsseitig jeweils mehrere Anstechspitzen vorhanden sein.

Die Rollen des ersten und zweiten Brühmodulteils können im Vergleich zu den hier beschriebenen Anordnungen auch vertauscht sein. D.h. es kann sein, dass das Brühmodulteil, welches die Kapselaufnahme aufweist, als Injektor ausgebildet ist, wobei dann das andere Brühmodulteil die Ausleitvorrichtung bildet. Auch für andere Funktionen ist ein Vertauschen möglich; bspw. kann der Bedienhebel extraktionsseitig angeordnet sein.

## Patentansprüche

1. Brühmodul (1, 101, 201) für ein Extraktionsgerät oder ein Gerät zum Herstellen von Getränken oder anderen Lösungen aus einem löslichen Produkt, beispielsweise eine Kaffeemaschine, zum portionenweisen Zubereiten eines Getränkes oder anderen Extraktionsprodukts aus einem in einer Portionspackung (10) verpackten Extraktionsgut, aufweisend ein Gehäuse, ein durch einen Mechanismus relativ zum Gehäuse bewegbares erstes Brühmodulteil und ein zweites Brühmodulteil, wobei das erste und das zweite Brühmodulteil einen Injektor zum Einleiten einer Extraktionsflüssigkeit in die in Portionspackung und eine Ausleitvorrichtung zum Ausleiten eines Extraktionsprodukts aus der Portionspackung bilden, **dadurch gekennzeichnet, dass** der Mechanismus eine drehbar am Gehäuse (2) gelagerte Kurvenscheibe (15) mit einer spiralförmig verlaufenden Führungsfläche aufweist und das erste Brühmodulteil durch die Führungsfläche entlang einer gehäusefesten Verschiebungsstrecke verschiebbar ist, indem die Kurvenscheibe gedreht wird.

2. Brühmodul nach Anspruch 1, **dadurch gekennzeichnet, dass** die Führungsfläche durch eine spiralförmig verlaufende Führungsnut (16) gebildet wird, und dass ein Führungselement des ersten Brühmodulteils in die Führungsnut (16) eingreift.

3. Brühmodul nach Anspruch 2, **dadurch gekennzeichnet, dass** das Führungselement zusätzlich in eine am Gehäuse (2) vorhandene oder mit dem Gehäuse ortsfest verbundene Gehäuse-Führungsnut (21) eingreift, welche sich in Verschiebungsrichtung erstreckt, wobei das Führungselement des ersten Brühmodulteils vorzugsweise ein in die Gehäuse-Führungsnut (21) und die Führungsnut (16) ragender Führungszapfen (17, 18) ist.

4. Brühmodul nach Anspruch 2 oder 3, **dadurch gekennzeichnet, dass** das Führungselement und die Führungsnut (16) so ausgebildet und angeordnet, sind, dass sich das Führungselement in der Führungsnut (16) verstemmt, wenn das erste und zweite Brühmodulteil in einem geschlossenen Zustand des Brühmoduls auseinander gedrückt werden, wobei sich beispielsweise die Führungselemente oberhalb und unterhalb einer Drehachse der Kurvenscheibe befinden.

5. Brühmodul nach einem der vorangehenden Ansprüche, **gekennzeichnet durch** einen Antrieb in Form eines Bedienhebels (26), welcher so an die Kurvenscheibe gekoppelt ist, dass durch eine Schwenkbewegung des Bedienhebels die Kurvenscheibe gedreht wird oder einen elektrischen Antrieb (71, 72) zum Drehen der Kurvenscheibe.

6. Brühmodul nach einem der vorangehenden Ansprüche, **gekennzeichnet durch** zwei Kurvenscheiben mit spiegelbildlicher Anordnung der Führungsflächen.

7. Brühmodul nach einem der vorangehenden Ansprüche, **dadurch gekennzeichnet, dass** das erste Brühmodulteil oder das zweite Brühmodulteil ein Brühmodulteil-Gehäuse (11) und eine erste Anstechspitze zum Anstechen der als Kapsel ausgebildeten Portionspackung aufweist, und dass die erste Anstechspitze (13) durch Verschliessen der Brühkammer relativ zum Brühmodulteil-Gehäuse (11) zu einem Inneren der Brühkammer hin verschiebbar ist.

8. Brühmodul nach einem der vorangehenden Ansprüche, wobei das zweite Brühmodulteil relativ zum Gehäuse (2) entlang der Achse in einer zur Bewegungsrichtung des ersten Brühmodulteils entgegengesetzten Richtung bewegbar ist.

9. Brühmodul nach Anspruch 8, **dadurch gekennzeichnet, dass** ein Mechanismus zum Bewegen des zweiten Brühmodulteils an den Mechanismus zum Bewegen des ersten Brühmodulteils gekoppelt ist, derart, dass im Betriebszustand des Brühmoduls zusammen mit einer axialen Bewegung des ersten Brühmodulteils immer auch eine entgegengesetzte Bewegung des zweiten Brühmodulteils ausgelöst wird.

10. Brühmodul nach Anspruch 8 oder 9, mit einer zweiten spiralförmigen Führungsfläche, welche mit einem Führungselement des zweiten Brühmodulteils so in Eingriff steht, dass diese Drehung der Kurvenscheibe eine axiale Bewegung des zweiten Brühmodulteils in die zur Bewegung des ersten Brühmodulteils entgegengesetzte Richtung bewirkt.

11. Brühmodul (101, 201) nach einem der vorangehenden Ansprüche, wobei das erste Brühmodulteil ein Brühmodulteil-Gehäuse (11) aufweist, und die erste Anstechspitze (13) durch Verschliessen der Brühkammer relativ zum Brühmodulteil-Gehäuse (11) zu einem Inneren der Brühkammer hin verschiebbar ist.

12. Brühmodul nach Anspruch 11, **gekennzeichnet durch** einen Schwenkhebel (81), welcher durch eine Bewegung des ersten Brühmodulteils relativ zum zweiten Brühmodulteil verschwenkbar ist, und durch einen Kolben (14), mit welchem die erste Anstechspitze (13) verbunden ist, wobei der Kolben (14) so an den Schwenkhebel (81) gekoppelt ist, dass dieser durch eine Schwenkbewegung des Schwenkhebels verschiebbar ist.

13. Brühmodul nach Anspruch 12, **dadurch gekennzeichnet, dass** das Gehäuse (2) eine erste Anschlagfläche (83) und eine zweite Anschlagfläche (84) bildet, der Schwenkhebel beim Öffnen des Brühmoduls durch Anstehen an der ersten Anschlagfläche (83) bewegbar ist und dadurch die erste Anstechspitze (13) zurückzieht und beim Verschliessen durch Anstehen an der zweiten Anschlagfläche (84) bewegbar ist und dadurch die erste Anstechspitze (13) ausfährt.

14. Brühmodul nach einem der vorangehenden Ansprüche, **dadurch gekennzeichnet, dass** es ein horizontales Brühmodul ist und dazu eingerichtet ist, dass nach einem Brühvorgang spätestens durch ein Öffnen des Brühmoduls die verbrauchte Kapsel (10) nach unten in einen Kapselbehälter fällt, wobei bevorzugt ein Paar von Kapselführungselementen (31) mit je einer ersten Kapselführungsnut (32) zum Aufnehmen eines Kapselkragens vorhanden ist, wobei die erste Kapselführungsnut (32) nach unten durch einen Haltemittel (34) abgeschlossen ist, und wobei die Kapselführungselemente (31) je eine zweite Kapselführungsnut (33) aufweisen, die nach unten offen ist, wobei die Führungselemente so eingerichtet und angeordnet sind, dass beim Einwerfen der Kapsel ein Kapselkragen in die erste Kapselführungsnut (32) gelangt, und dass durch das Öffnen der Brühkammer der Kapselkragen in die zweite Kapselführungsnut (33) gelangt.

15. Extraktionsgerät oder Gerät zum Herstellen von Getränken oder anderen Lösungen aus einem löslichen Produkt, aufweisend einen Behälter oder Anschluss für die Brühflüssigkeit, eine Pumpe, eine Heizung und ein Brühmodul (1, 101, 201) nach einem der vorangehenden Patentansprüche.

## Claims

1. A brewing module (1, 101, 201) for an extraction apparatus or an apparatus for creating drinks or other solutions from a soluble product, for example a coffee machine, for the portioned preparation of a drink or another extraction product from an extraction material packaged in a portion package (10), comprising a housing, a first brewing module part which by way of a mechanism is movable relative to the housing, and a second brewing module part, wherein the first and the second brewing module part form an injector for introducing an extraction fluid into the portion package and a discharge device for leading an extraction product out of the portion package, **characterised in that** the mechanism comprises a cam disc (15) which is rotatably mounted on the housing (2) and is with a spirally running guide surface, and the first brewing module part is displaceable by the guide surface along a displacement path fixed with the housing, by way of the cam disc being rotated.

2. The brewing module according to claim 1, **characterised in that** the guide surface is formed by a spirally running guide groove (16) and that a guide element of the first brewing module part engages into the guide groove (16).

3. The brewing module according to claim 2, **characterised in that** the guide element additionally engages into a housing guide groove (21) which is present on the housing (2) or is connected to the housing in a stationary manner, said housing guide groove extending in a displacement direction, wherein the guide element of the first brewing module part is preferably a guide pin (17, 18) which projects into the housing guide groove (21) and into the guide groove (16).

4. The brewing module according to claim 2 or 3, **characterised in that** the guide element and the guide groove (16) are designed and arranged such that the guide element locks in the guide groove (16) when the first and the second brewing module part are pressed apart in a closed condition of the brewing module, wherein for example the guide elements are located above and below a rotation axis of the cam disc.

5. The brewing module according to one of the preceding claims, **characterised by** a drive in the form of an operating lever (26) which is coupled to the cam disc such that the cam disc is rotated by a pivot movement of the operating lever, or by an electrical drive (71, 72) for rotating the cam disc.

6. The brewing module according to one of the preceding claims, **characterised by** two cam discs with a mirror-image arrangement of the guide surfaces.

7. The brewing module according to one of the preceding claims, **characterised in that** the first brewing module part or the second brewing module part comprises a brewing module part housing (11) and a first piercing tip for piercing the portion package designed as a capsule, and that the first piercing tip (13) can be displaced relative to the brewing module part housing (11) towards an interior of the brewing chamber by way of closure of the brewing chamber.

8. The brewing module according to one of the preceding claims, wherein the second brewing module part is movable relative to the housing (2) along the axis in a direction which is opposite to the movement direction of the first brewing module part.

9. The brewing module according to claim 8, **characterised in that** a mechanism for moving the second brewing module part is coupled onto the mechanism for moving the first brewing module part, in a manner such that in the operating condition of the brewing module together with an axial movement of the first brewing module part, an opposite movement of the second brewing module is also always activated.

10. The brewing module according to claim 8 or 9, with a second spiral-shaped guide surface, said second guide surface being engaged with a guide element of the second brewing module part such that this rotation of the cam disc effects an axial movement of the second brewing module part in the direction opposite to the movement of the first brewing module part.

11. The brewing module according to one of the preceding claims, wherein the first brewing module part comprises a brewing module part housing (11) and the first piercing tip (13) can be displaced relative to the brewing module part housing (11) towards an interior of the brewing chamber by way of closure of the brewing chamber.

12. The brewing module according to claim 11, **characterised by** a pivot lever (81) which is pivotable by way of a movement of the first brewing module part relative to the second brewing module part, and by a plunger (14), to which the first piercing tip (13) is connected, wherein the plunger (14) is coupled to the pivot lever (81) such that this plunger can be displaced by a pivot movement of the pivot lever.

13. The brewing module according to claim 12, **characterised in that** the housing (2) forms a first abutment surface (83) and a second abutment surface (84), and the pivot lever on opening the brewing module is movable by way of abutting on the first abutment surface (83) and retracts the first piercing tip (13) by way of this, and on closure is movable by abutting on the second abutment surface (84) and extends the first piercing tip (13) by way of this.

14. The brewing module according to one of the preceding claims, **characterised in that** it is a horizontal brewing module and is configured such that after a brewing procedure and at the latest by way of opening the brewing module, the spent capsule (10) drops downwards into a capsule container, wherein preferably a pair of capsule guide elements (31) in each case with a first capsule guide groove (32) for receiving a capsule collar is present, wherein the first capsule guide groove (32) is terminated to the bottom by a holding means (34), and wherein the capsule guide elements (31) each comprise a second capsule guide groove (33) which is open to the bottom, wherein the guide elements are configured and arranged such that on inserting the capsule, a capsule collar gets into the first capsule guide groove (32), and that the capsule collar gets into the second capsule guide groove (33) by way of opening the brewing chamber.

15. An extraction apparatus or apparatus for creating drinks or other solutions from a soluble product, comprising a container or connection for a brewing fluid, a pump, a heating and a brewing module (1, 101, 201) according to one of the preceding patent claims.

## Revendications

1. Module d'infusion (1, 101, 201) pour appareil d'extraction ou appareil de préparation de boissons ou d'autres solutions de produit soluble, par exemple une machine à café, pour la préparation portion par portion d'une boisson ou d'un autre produit d'extraction à partir d'une matière à extraire emballée dans un emballage (10) de portion,
le module d'infusion présentant un boîtier, une première partie de module d'infusion qu'un mécanisme permet de déplacer par rapport au boîtier et une deuxième partie de module d'infusion,
la première et la deuxième partie de module d'infusion formant un injecteur qui introduit un liquide d'extraction dans l'emballage de portion et un ensemble de sortie qui guide un produit d'extraction hors de l'emballage de portion,
**caractérisé en ce que**
le mécanisme présente une came (15) montée à rotation sur le boîtier (2) et dotée d'une surface de guidage se développant en spirale et
**en ce que** grâce à la surface de guidage, la première partie de module d'infusion peut coulisser sur un parcours de déplacement fixe par rapport au boîtier en faisant tourner la came.

2. Module d'infusion selon la revendication 1, **caractérisé en ce que** la surface de guidage est formée par une rainure de guidage (16) se développant en spirale et **en ce qu'**un élément de guidage de la première partie de module d'infusion s'engage dans la rainure de guidage (16).

3. Module d'infusion selon la revendication 2, **caractérisé en ce que** l'élément de guidage s'engage en outre dans une rainure de guidage (21) prévue sur le boîtier ou reliée fixement au boîtier, l'élément de guidage de la première partie de module d'infusion étant de préférence un tourillon de guidage (17, 18) s'engageant dans la rainure de guidage (21) du boîtier et la rainure de guidage (16).

4. Module d'infusion selon les revendications 2 ou 3, **caractérisé en ce que** l'élément de guidage et la rainure de guidage (16) sont configurés et disposés de telle sorte que l'élément de guidage se coince dans la rainure de guidage (16) lorsque la première et la deuxième partie de module d'infusion sont écartées l'une de l'autre alors que le module d'infusion est en situation fermée, les éléments de guidage se trouvant alors par exemple au-dessus et en dessous de l'axe de rotation de la came.

5. Module d'infusion selon l'une des revendications précédentes, par un entraînement en forme de levier d'actionnement (26) accouplé à la came de telle sorte qu'un déplacement de pivotement du levier d'actionnement (26) fasse tourner la came, ou par en entraînement électrique (71, 72) qui fait tourner la came.

6. Module d'infusion selon l'une des revendications précédentes, par deux cames dont les surfaces de guidage sont disposées à symétrie spéculaire.

7. Module d'infusion selon l'une des revendications précédentes, **caractérisé en ce que** la première partie de module d'infusion ou la deuxième partie de module d'infusion présentent un boîtier (11) de partie de module d'infusion et une première pointe de perforation de l'emballage de portion configuré comme capsule et **en ce que** la première pointe de perforation (13) peut être déplacée vers l'intérieur de la chambre d'infusion par fermeture de la chambre d'infusion par rapport au boîtier (11) de partie de module d'infusion.

8. Module d'infusion selon l'une des revendications précédentes, dans lequel la deuxième partie de module d'infusion peut être déplacée par rapport au boîtier (2) le long de l'axe dans le sens opposé au sens de déplacement de la première partie de module d'infusion.

9. Module d'infusion selon la revendication 8, **caractérisé en ce qu'**un mécanisme de déplacement de la deuxième partie de module d'infusion est couplé au mécanisme de déplacement de la première partie de module d'infusion de telle sorte que lorsque le module d'infusion est en fonctionnement, un déplacement axial de la première partie de module d'infusion entraîne toujours un déplacement en sens opposé de la deuxième partie de module d'infusion.

10. Module d'infusion selon les revendications 8 ou 9, doté d'une deuxième surface de guidage en forme de spirale qui engage un élément de guidage de la deuxième partie de module d'infusion de telle sorte que cette rotation de la came ait pour effet un déplacement axial de la deuxième partie de module d'infusion dans le sens opposé au déplacement de la de la première partie de module d'infusion.

11. Module (101, 201) d'infusion selon l'une des revendications précédentes, dans lequel la première partie de module d'infusion présente un boîtier (11) de partie de module d'infusion et la première pointe de perforation (13) peut être déplacée vers l'intérieur de la chambre d'infusion par fermeture de la chambre d'infusion par rapport au boîtier (11) de partie de module d'infusion.

12. Module d'infusion selon la revendication 11, par un levier pivotant (81) qui peut pivoter par rapport à la deuxième partie de module d'infusion lors d'un déplacement de la première partie de module d'infusion, et par un piston (14) auquel est reliée la première pointe de perforation (13), le piston (14) étant accouplé au levier pivotant (81) de telle sorte qu'un déplacement de pivotement du levier pivotant entraîne le coulissement du piston.

13. Module d'infusion selon la revendication 12, **caractérisé en ce que** le boîtier (2) forme une première surface de butée (83) et une deuxième surface de butée (84) et **en ce que** lors de l'ouverture du module d'infusion, le levier pivotant soit déplacé en se positionnant sur la première surface de butée (83) et qu'ainsi la première pointe de perforation (13) se rétracte et que lors de la fermeture, il soit déplacé en se positionnant sur la deuxième surface de butée (84) et qu'ainsi la première pointe de perforation (13) avance.

14. Module d'infusion selon l'une des revendications précédentes, **caractérisé en ce que** il est un module d'infusion horizontal et est conçu pour qu'après une opération d'infusion, au plus tard par ouverture du module d'infusion, la capsule (10) usagée tombe vers le bas dans un réceptacle à capsules, deux éléments (31) de guidage de capsule étant associés chacun à une première rainure respective (32) de guidage de capsule pour reprendre un collet de la capsule, la première rainure (32) de guidage de capsule étant fermée dans le bas par un moyen de maintien (34) et chacun des éléments (31) de guidage de capsule présentant une deuxième rainure respective (33) de guidage de capsule qui ouverte dans le bas, les éléments de guidage étant conçus et disposés de telle sorte que lors de l'expulsion d'une capsule, le collet de la capsule vient se placer dans la première rainure (32) de guidage de capsule et que l'ouverture de la chambre d'infusion amène le collet de la capsule dans la deuxième rainure (33) de guidage de capsule.

15. Appareil d'extraction ou appareil de préparation de boissons ou d'autres solutions de produit soluble, présentant un récipient ou un raccordement au liquide d'infusion, une pompe, un chauffage et un module d'infusion (1, 101, 201) selon l'une des revendications précédentes.
